(19) Europäisches Patentamt / European Patent Office / Office européen des brevets

(11) **EP 3 853 270 B1**

(12) **EUROPEAN PATENT SPECIFICATION**

(45) Date of publication and mention
of the grant of the patent:
**17.07.2024   Bulletin 2024/29**

(21) Application number: **19762160.0**

(22) Date of filing: **04.09.2019**

(51) International Patent Classification (IPC):
$C08F\ 210/06\ ^{(2006.01)}$    $C08F\ 2/00\ ^{(2006.01)}$
$C08F\ 210/08\ ^{(2006.01)}$    $C08F\ 210/16\ ^{(2006.01)}$
$C08F\ 4/654\ ^{(2006.01)}$

(52) Cooperative Patent Classification (CPC):
(C-Sets available)
**C08F 210/06;** C08L 2203/162; C08L 2205/025;
C08L 2314/02                                      (Cont.)

(86) International application number:
**PCT/EP2019/073553**

(87) International publication number:
**WO 2020/057974 (26.03.2020 Gazette 2020/13)**

(54) **PROPYLENE TERPOLYMER**

PROPYLENTERPOLYMER

TERPOLYMÈRE DE PROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.09.2018  EP 18195698**

(43) Date of publication of application:
**28.07.2021   Bulletin 2021/30**

(73) Proprietor: **Basell Poliolefine Italia S.r.l.
20121 Milano (IT)**

(72) Inventors:
• **MASSARI, Paola**
  **44122 Ferrara (IT)**
• **CAVALIERI, Claudio**
  **44122 Ferrara (IT)**
• **CATHELIN, Caroline**
  **44122 Ferrara (IT)**
• **TARTARI, Davide**
  **44122 Ferrara (IT)**
• **CIARAFONI, Marco**
  **44122 Ferrara (IT)**
• **PANTALEONI, Roberto**
  **44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-2009/019169     WO-A1-2015/101593**

(52) Cooperative Patent Classification (CPC): (Cont.)

C-Sets
**C08F 210/06, C08F 2/001;**
**C08F 210/06, C08F 4/6492;**
**C08F 210/06, C08F 4/6574;**
**C08L 23/14, C08L 23/14;**
C08F 210/06, C08F 210/08, C08F 210/16,
C08F 2500/12, C08F 2500/17, C08F 2500/34,
C08F 2500/35, C08F 2500/27, C08F 2500/36,
C08F 2500/26

**Description**

FIELD OF THE INVENTION

The present disclosure relates to a composition comprising terpolymer of propylene ethylene and 1-butene suitable for obtaining films in particular BOPP (biaxially oriented polypropylene) films having a good seal initiation temperature (SIT) and good optical properties..

BACKGROUND OF THE INVENTION

It is well known that propylene, ethylene and 1-butene terpolymers can be used for obtaining films, in particular biaxially oriented polypropylene films (BOPP) widely used for the packaging of foodstuff using automatic machines. In fact the said films are characterized by a particular good balance of processability ("machinability"), optical and mechanical properties.

WO 2017/114840 relates to a process for the production of a terpolymer composition obtained in two loop reactors. The weight ratio of C4 to $C_{10}$ alpha-olefin content in the second polymer fraction (P2) / $C_4$ to $C_{10}$ alpha-olefin content in the first polymer fraction (PI) is in the range of 0,35 to 0,65.

It has now been found that a particularly good seal initiation temperature (SIT) with respect to the melting point of the terpolymer and a good haze can be obtained by a composition of terpolymers of propylene ethylene and 1-butene wherein one terpolymer has particular NMR features.

SUMMARY OF THE INVENTION

Thus, the present disclosure provides a terpolymer compositions comprising:

A) From 80 wt% to 97 wt%; of a propylene, ethylene, 1-butene terpolymer having:

i) the content of ethylene derived units ranging from 0.5 wt% to 3.2 wt%;
ii) the content of 1-butene derived units ranging from 7.2 wt% to 14.8 wt%
iii) the xylene soluble fraction at 25°C ranging from 7.2 wt% to 13.4 wt%;
iv) the melting point determined by differential scanning calorimetry (DSC), according to ISO 11357-3, with a heating rate of 20 °C/minute ranging from 123°C to 138 °C;
v) the $C^{13}$ NMR sequences EEE ranging from 0.16 mol% to 0.40 mol%;
vi) the melt flow rate, MFR, measured according to ISO 1133 at 230 °C with a load of 2.16 kg, ranging from 1.0 g/10 min to 20.0 g/10 min;

B) From 20 wt% to 3 wt%; of a propylene, ethylene, 1-butene terpolymer having:

i) the content of ethylene derived units ranging from 0.5 wt% to 3.2 wt%;
ii) the content of 1-butene derived units ranging from 14.4 wt% to 26.5 wt%
iii) the xylene soluble fraction at 25°C ranging from 38.2 wt% to 60.2 wt%; wherein the content of 1-butene derived units of component A) is lower than the amount of the content of 1-butene derived units of component B); and

the terpolymer composition having the melt flow rate, MFR, measured according to ISO 1133 at 230 °C with a load of 2.16 kg, ranging from 3.0 g/10 min to 20.0 g/10 min;
the sum of the amounts of A) and B) being 100 wt%.

DETAILED DESCRIPTION OF THE INVENTION

Thus, the present disclosure provides a terpolymer compositions comprising:

A) From 80 wt% to 97 wt%; preferably from 83 wt% to 95 wt%; more preferably from 85 wt% to 93 wt% of a propylene, ethylene, 1-butene terpolymer having:

i) the content of ethylene derived units ranging from 0.5 wt% to 3.2 wt%; preferably ranging from 0.7 wt% to 2.8 wt%; more preferably ranging from 0.9 wt% to 2.2 wt%;
ii) the content of 1-butene derived units ranging from 7.2 wt% to 14.8 wt%; preferably ranging from 8.3 wt% to 13.2 wt%; more preferably ranging from 9.5 wt% to 12.2 wt%;

iii) the xylene soluble fraction at 25°C ranging from 7.2 wt% to 13.4 wt%; preferably ranging from 8.3 wt% to 12.2 wt%;

iv) the melting point determined by differential scanning calorimetry (DSC), according to ISO 11357-3, with a heating rate of 20 °C/minute ranging from 123°C to 138 °C; preferably ranging from 127°C to 134 °C; more preferably ranging from 128°C to 132 °C;

v) the $C^{13}$ NMR sequences EEE ranging from 0.16 mol% to 0.40 mol%; preferably ranging from 0.18 mol% to 0.35 mol%; more preferably ranging from 0.20 mol% to 0.30 mol%;

vi) the melt flow rate, MFR, measured according to ISO 1133 at 230 °C with a load of 2.16 kg, ranging from 1.0 g/10 min to 20.0 g/10 min; preferably ranging from 3.0 g/10 min to 13.0 g/10 min;

B) from 20 wt% to 3 wt%; preferably from 17 wt% to 5 wt%; more preferably from 15 wt% to 7 wt% of a propylene, ethylene, 1-butene terpolymer having:

i) the content of ethylene derived units ranging from 0.5 wt% to 3.2 wt%; preferably ranging from 0.7 wt% to 2.8 wt%; more preferably ranging from 0.9 wt% to 2.2 wt%;

ii) the content of 1-butene derived units ranging from 14.4 wt% to 26.5 wt%; preferably ranging from 16.6 wt% to 23.3 wt%; more preferably ranging from 17.6 wt% to 21.4 wt%;

iii) the xylene soluble fraction at 25°C ranging from 38.2 wt% to 60.2 wt%; preferably ranging from 40.3 wt% to 55.7 wt%; more preferably ranging from 42.1 wt% to 54.8 wt%;

wherein the content of 1-butene derived units of component A) is lower than the amount of the content of 1-butene derived units of component B); and

the terpolymer composition having the melt flow rate, MFR, measured according to ISO 1133 at 230 °C with a load of 2.16 kg, ranging from 3.0 g/10 min to 20.0 g/10 min; preferably ranging from 4.0 g/10 min to 13.2 g/10 min;

the sum of the amounts of A) and B) being 100 wt%.

For the present disclosure, the term "terpolymer" is referred to polymers containing three kinds of comonomers, such as propylene, ethylene and 1-butene.

Component A) of the terpolymer composition of the present disclosure is characterized among other feature by the $C^{13}$ NMR sequences EEE ranging from 0.18 mol% to 0.40 mol%. This value is obtained by a polymerizing process being carried out in a reactor having two interconnected polymerization zones, a riser and a downcomer, wherein the growing polymer particles:

(a) flow through the first of said polymerization zones, the riser, under fast fluidization conditions in the presence of propylene ethylene and 1-butene;

(b) leave the riser and enter the second of said polymerization zones, the downcomer, through which they flow downward in a densified form in the presence of propylene, ethylene and 1-butene, wherein the concentration of ethylene in the downcomer is higher than in the riser;

(c) leave the downcomer and are reintroduced into the riser, thus establishing a circulation of polymer between the riser and the downcomer.

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process for obtaining component A) the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer. This particular polymerization process and apparatus is described in EP 1012195.

The process for preparing the propylene ethylene 1-butene terpolymer component A) of the present disclosure is carried out in presence of a highly stereospecific heterogeneous Ziegler-Natta catalyst. The Ziegler-Natta catalysts the propylene ethylene 1-butene terpolymer component A) of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

The propylene ethylene 1-butene terpolymer component B) is preferably prepared in a gas phase process, preferably in a fluidized bed gas phase process. Components A) and B) are preferably prepared in a cascade process wherein component A) is prepared and then component B) is prepared in a gas phase reactor in the presence of component A) without the need to add additional catalyst.

The terpolymer composition of the present disclosure are particularly fit for the production of films, in particular cast or BOPP films. The obtained film are characterized by a particular high delta between the melting point and the SIT and of good haze. In particular the difference between the melting point of the composition and the SIT is lower than 20°C preferably lower than 23°C more preferably lower than 26°C.

The haze measured on 50 $\mu$m cast film is lower than 0.7 % preferably lower than 0.5%.

The film obtained with the terpolymer composition of the present disclosure may also contain the additives that are commonly used for the film manufacturing, and especially for the films used for packaging applications with automatic machines, such as anti-oxidants, process stabilizers, slip agents, antistatic agents, antiblock agents, and antifog agents.

The following examples are given to illustrate the present disclosure:

## EXAMPLES

### Xylene-soluble (XS) Fraction at 25 °C

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C. The Fraction of xylene solubles of component b) has been calculated according to the formula XStot=XsAWA+Xs-BWB;

wherein Xstot is the soluble xylene fraction of the overall composition XsA is the soluble xylene fraction of component A and WA is the amount of component A; XsB is the soluble xylene fraction of component B and WB is the amount of component B; wherein Wa+Wb=1.

### Melt Flow Rate (MFR)

Measured according to ISO 1133 at 230 °C with a load of 2.16 kg, unless otherwise specified.

### Determination of the Haze

Multilayer film speciments prepared as described below have been used. The haze value is measured using a Gardner photometric unit connected to a Hazemeter type UX-10 or an equivalent instrument having G.E. 1209 light source with filter "C". Reference samples of known haze are used for calibrating the instrument according to ASTM D1003.

**Determination of Ethylene and 1-butene content**

$^{13}$C NMR spectra were acquired on a Bruker AV600 spectrometer equipped with cryo probe, operating 150.91 MHz MHz in the Fourier transform mode at 120 °C.

The peak of the $S_{\delta\delta}$ carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane d$_2$ at 120 °C w. Each spectrum was acquired with a 90 ° pulse, 15 seconds of delay between pulses and CPD to remove $^1$H-$^{13}$C coupling. 512 transients were stored in 65 K data points using a spectral window of 9000 Hz.

Triad distribution was obtained using the following relations:

$$XPX = 100 \; I_8 / \Sigma$$

$$XPE = 100 \; I_5 / \Sigma$$

$$EPE = 100 \; I_4 / \Sigma$$

$$XBX = 100 \; I_3 / \Sigma$$

$$XBE = 100 \; I_2 / \Sigma$$

$$XEX = 100 \; I_9 / \Sigma$$

$$XEE = 100 \; I_1 / \Sigma$$

$$EEE = 100 \; (0.5 \; I_7 + 0.25 \; I_6) / \Sigma$$

Where $\Sigma = I_8 + I_5 + I_4 + I_3 + I_2 + I_9 + I_1 + 0.5 \; I_7 + 0.25 \; I_6$
I are the areas of the corresponding carbon as reported in Table a
and X can be propylene or 1-butene

The molar content of Ethylene, Propylene and 1-Butene is obtained from triads using the following relations:

$$P \; (m\%) = XPX + XPE + EPE$$

$$B \; (m\%) = XBX + XBE + EBE$$

$$E \; (m\%) = EEE + XEE + XEX$$

Molar content was transformed in weight using monomers molecular weight.

**Table a, Assignments of the $^{13}$C NMR spectrum of Ethylene/Propylene/1-Butene terpolymers**

| Number | Chemical Shift (ppm) | Carbon | Sequence |
|---|---|---|---|
| 1 | 37.64 - 37.35 | $S_{\alpha\delta}$ | PEE |
| 2 | 37.35 - 37.15 | $T_{\beta\delta}$ | XBE |

(continued)

| Number | Chemical Shift (ppm) | Carbon | Sequence |
|---|---|---|---|
| 3 | 35.27 - 34.92 | $T_{\beta\beta}$ | XBX |
| 4 | 33.29 - 33.15 | $T_{\delta\delta}$ | EPE |
| 5 | 30.93 - 30.77 | $T_{\beta\delta}$ | XPE |
| 6 | 30.35 - 30.26 | $S_{\gamma\delta}$ | PEEE |
| 7 | 29.97 - 29.85 | $S_{\delta\delta}$ | EEE |
| 8 | 29.14 -28.31 | $T_{\beta\beta}$ | XPX |
| 9 | 24.88 - 24.14 | $S_{\beta\beta}$ | XEX |

**Example 1 and comparative example 2**

**Procedure for the preparation of the spherical adduct**

Microspheroidal $MgCl_2 \cdot pC_2H_5OH$ adduct was prepared according to the method described in Comparative Example 5 of WO98/44009, with the difference that $BiCl_3$ in a powder form and in the amount of 3 mol% with respect to the magnesium has been added before feeding of the oil. The adduct contains 11.2 wt % of Mg.

**Procedure for the preparation of the solid catalyst component**

Into a 300 L jacketed reactor, equipped with mechanical stirrer, condenser and thermocouple 200 L of $TiCl_4$ were introduced at room temperature under nitrogen atmosphere. After cooling to 0°C, while stirring, diisobutylphthalate and 8 kg of the spherical adduct (prepared as described above) were sequentially added. The amount of charged internal donor was such to meet a Mg/donor molar ratio of 8. The temperature was raised to 100°C and maintained for 1 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1/2 hour. Stirring was stopped again, the solid was allowed to settle and the supernatant liquid was siphoned off at 120 °C. The treatment with $TiCl_4$ at 120 °C was then repeated again with the same procedure as before but the treatment time was decreased to 15 minutes. The solid was washed with anhydrous hexane six times in temperature gradient down to 60°C and one time at room temperature. The obtained solid was then dried under vacuum.

**Prepolymerization treatment**

Before introducing it into the polymerization reactors, the solid catalyst component described above have been contacted with triethyl aluminum (TEAL) and Dicyclopentyldimethoxysilane (DCPMS, D donor) in a ratio reported on table 1. Then the resulting mixture is subjected to prepolymerization by maintaining it in suspension in liquid propylene at 20 °C for about 5 minutes before introducing it into the polymerization reactor.

**Polymerization**

The polymerization was carried out in gas-phase polymerization reactor comprising two interconnected polymerization zones, a riser and a downcomer, as described in European Patent EP1012195, i.e. the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. No "barrier stream" has been used in comparative example 2.

The polymer produced in the first reactor is discharged in a continuous flow and it is introduced, in a continuous flow, into a second fluidized bed gas phase polymerization reactor, together with quantitatively constant flows of hydrogen (when used ) 1-butene, ethylene and propylene in the gas state as reported in table 1. Samples of the terpolymer of the first reactors are taken in order to test and analyze them.

The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported in Table 1.

Table 1

| Example | | Ex 1 | Comp Ex 2 |
|---|---|---|---|
| **PRECONTACT** | | | |
| Temperature | °C | 15 | 15 |
| Residence Time | min | 15 | 15 |
| TEAL/catalyst | wt/wt | 7 | 7 |
| TEAL/Ext. Donor | g/g | 20 | 20 |
| **PREPOLYMERIZATION** | | | |
| Temperature | °C | 20 | 20 |
| Residence Time | min | 8 | 8 |
| **POLYMERIZATION Component A** | | | |
| Temperature | bar-g | 67 | 67 |
| Pressure | bar-g | 22 | 22 |
| Residence Time | min | 118 | 121 |
| Split holdup riser | wt% | 30 | 30 |
| Split holdup downcomer | wt% | 70 | 70 |
| C2/ C2$^-$+ C3 riser | mol/mol | 0.007 | 0.013 |
| C2/ C2$^-$+ C3 downcomer | mol/mol | 0.013 | 0.008 |
| C4/ C4$^-$+ C3$^-$ | mol/mol | 0.18 | 0.18 |
| H$_2$/C3 riser | mol/mol | 0.094 | 0.07 |
| | | | |
| **Gas phase comp B** | | | |
| Temperature | bar-g | 75 | 75 |
| Pressure | bar-g | 17 | 17 |
| Residence Time | min | 60 | 70 |
| H2/C3 | Mol/mol | 0.081 | 0.07 |
| C2/C2+C3 | Mol/mol | 0.011 | 0.009 |
| C4/C4+C3 | Mol/mol | 0.27 | 0.3 |

C2 = ethylene; C3 = propylene : C4 = 1-butene

The properties of the polymers of example 1 and comparative example 2 are reported in table 2.

Table 2

| | | Comp ex 2 | Ex 1 |
|---|---|---|---|
| Component A | | | |
| MFR | g/10' | 6.2 | 5.5 |
| C2-% content | wt% | 1,1 | 1,2 |
| C4-% content (IR) | wt% | 9,7 | 9.8 |

(continued)

|  |  | Comp ex 2 | Ex 1 |
|---|---|---|---|
| Component A |  |  |  |
| Xylene solubles (Xs) | wt% | 7.5 | 10.6 |
| Intrinsic viscotity of XS |  | 1.08 | 1.48 |
| Tm | °C | 130.2 | 131.1 |
| EEE sequences | Mol% | 0.14 | 0.21 |
| SIT | °C | 106 | 107 |
| Haze |  | 0.1 | 0.4 |
| Amount of component A | Wt% | 90 | 90 |
| Component B |  |  |  |
| C2-% content | wt% | 1.2* | 1.2* |
| C4-% content (IR) | wt% | 22.7* | 21.8* |
| Xylene solubles (Xs) | wt% | 50* | 57* |
| Amount of component B | Wt% | 10 | 10 |
| Total composition |  |  |  |
| MFR | g/10' | 7.1 | 6.0 |
| Tm | °C | 129.0 | 129.0 |
| SIT | °C | 105 | 103 |
| Tm-SIT |  | 24 | 26 |
| Haze | % | 0.2 | 0.2 |
| * calculated |  |  |  |

Table 2 shows that component A) obtained according to the invention shows a higher SIT with respect to component A) of the comparative example but the SIT of the composition of the invention is lower (103 °C) than the SIT of the comparative example.

## Claims

1. A terpolymer composition comprising:

A) From 80 wt% to 97 wt% of a propylene, ethylene, 1-butene terpolymer having:

i) the content of ethylene derived units ranging from 0.5 wt% to 3.2 wt%, measured according to the method defined in the description;
ii) the content of 1-butene derived units ranging from 7.2 wt% to 14.8 wt%, measured according to the method defined in the description;
iii) the xylene soluble fraction at 25°C ranging from 7.2 wt% to 13.4 wt%, measured according to the method defined in the description;
iv) the melting point determined by differential scanning calorimetry (DSC), according to ISO 11357-3, with a heating rate of 20 °C/minute ranging from 123°C to 138 °C;
v) the $C^{13}$ NMR sequences EEE ranging from 0.16 mol% to 0.40 mol%, measured according to the method defined in the description;
vi) the melt flow rate, MFR, measured according to ISO 1133 at 230 °C with a load of 2.16 kg, ranging from 1.0 g/10 min to 20.0 g/10 min;

B) From 20 wt% to 3 wt%; of a propylene, ethylene, 1-butene terpolymer having:

    i) the content of ethylene derived units ranging from 0.5 wt% to 3.2 wt%;

    ii) the content of 1-butene derived units ranging from 14.4 wt% to 26.5 wt%;

    iii) the xylene soluble fraction at 25°C ranging from 38.2 wt% to 60.2 wt%; wherein the content of 1-butene derived units of component A) is lower than the amount of the content of 1-butene derived units of component B); and

the terpolymer composition having the melt flow rate, MFR, measured according to ISO 1133 at 230 °C with a load of 2.16 kg, ranging from 3.0 g/10 min to 20.0 g/10 min;

the sum of the amounts of A) and B) being 100 wt%.

2. The terpolymer according to claim 1 comprising from 83 wt% to 95 wt% of component A) and from 17 wt% to 5 wt% of component B).

3. The terpolymer according to anyone of claims 1-2 wherein in component A) the xylene soluble fraction at 25 °C ranges from 8.3 wt% to 12.2 wt%.

4. The terpolymer according to anyone of claims 1-3 wherein in component A) the melting point determined by differential scanning calorimetry (DSC), according to ISO 11357-3, with a heating rate of 20 °C/minute ranges from 127°C to 134 °C.

5. The terpolymer according to anyone of claims 1-4 wherein in component A) the $C^{13}$ NMR sequences EEE ranges from from 0.18 mol% to 0.35 mol%.

6. The terpolymer according to anyone of claims 1-5 wherein in component A) the content of ethylene derived units ranges from 0.7 wt% to 2.8 wt%.

7. The terpolymer according to anyone of claims 1-6 wherein in component A) the content of 1-butene derived units ranges from 8.3 wt% to 13.2 wt%.

8. The terpolymer according to anyone of claims 1-7 wherein in component B) the content of ethylene derived units ranges from 0.7 wt% to 2.8 wt%.

9. The terpolymer according to anyone of claims 1-8 wherein in component B) the content of 1-butene derived units ranges from 16.6 wt% to 23.3 wt%.

10. The terpolymer according to anyone of claims 1-9 having the melt flow rate, MFR, measured according to ISO 1133 at 230 °C with a load of 2.16 kg, ranging from 4.0 g/10 min to 13.2 g/10 min.

11. The terpolymer according to anyone of claims 1-10 wherein in component A) the melt flow rate, MFR, measured according to ISO 1133 at 230 °C with a load of 2.16 kg, ranges from 3.0 g/10 min to 13.0 g/10 min.

12. The terpolymer according to anyone of claims 1-11 wherein in component A) the content of ethylene derived units ranges from 0.9 wt% to 2.2 wt%.

13. The terpolymer according to anyone of claims 1-12 wherein in component A) the content of 1-butene derived units ranges from 9.5 wt% to 12.2 wt%

14. A film comprising the terpolymer of claims 1-13.

15. The film according to claim 14 being a BOPP film.

**Patentansprüche**

1. Terpolymerzusammensetzung, umfassend:

A) 80 Gew.% bis 97 Gew.% eines Propylen/Ethylen/1-Buten-Terpolymers, wobei:

i) der Gehalt der von Ethylen abgeleiteten Einheiten im Bereich von 0,5 Gew.% bis 3,2 Gew.% liegt, gemessen nach dem in den technischen Angaben definierten Verfahren;
ii) der Gehalt der von 1-Buten abgeleiteten Einheiten im Bereich von 7,2 Gew.% bis 14,8 Gew.% liegt, gemessen nach dem in den technischen Angaben definierten Verfahren;
iii) die in Xylol bei 25 °C lösliche Fraktion im Bereich von 7,2 Gew.% bis 13,4 Gew.% liegt, gemessen nach dem in den technischen Angaben definierten Verfahren;
iv) der durch Differentialscanningkalorimetrie (DSC) gemäß ISO 11357-3 mit einer Heizrate von 20 °C/Minute bestimmte Schmelzpunkt im Bereich von 123 °C bis 138 °C liegt;
v) die $C^{13}$-NMR-Sequenzen EEE im Bereich von 0,16 Mol.% bis 0,40 Mol.% liegen, gemessen nach dem in den technischen Angaben definierten Verfahren;
vi) die gemäß ISO 1133 bei 230 °C unter einer Last von 2,16 kg gemessene Schmelzflussrate, MFR, im Bereich von 1,0 g/10 min bis 20,0 g/10 min liegt;

B) 20 Gew.% bis 3 Gew.% eines Propylen/Ethylen/1-Buten-Terpolymers, wobei:

i) der Gehalt der von Ethylen abgeleiteten Einheiten im Bereich von 0,5 Gew.% bis 3,2 Gew.% liegt;
ii) der Gehalt der von 1-Buten abgeleiteten Einheiten im Bereich von 14,4 Gew.% bis 26,5 Gew.% liegt;
iii) die in Xylol bei 25 °C lösliche Fraktion im Bereich von 38,2 Gew.% bis 60,2 Gew.% liegt;
wobei der Gehalt der von 1-Buten abgeleiteten Einheiten der Komponente A) geringer als die Menge des Gehalts der von 1-Buten abgeleiteten Einheiten der Komponente B) ist; und
die Terpolymerzusammensetzung eine gemäß ISO 1133 bei 230 °C unter einer Last von 2,16 kg gemessene Schmelzflussrate, MFR, im Bereich von 3,0 g/10 min bis 20,0 g/10 min hat;
wobei die Summe der Mengen von A) und B) 100 Gew.% beträgt.

2. Terpolymer nach Anspruch 1, umfassend 83 Gew.% bis 95 Gew.% Komponente A) und 17 Gew.% bis 5 Gew.% Komponente B).

3. Terpolymer nach einem der Ansprüche 1 bis 2, wobei in Komponente A) die in Xylol bei 25 °C lösliche Fraktion im Bereich von 8,3 Gew.% bis 12,2 Gew.% liegt.

4. Terpolymer nach einem der Ansprüche 1 bis 3, wobei in Komponente A) der durch Differentialscanningkalorimetrie (DSC) gemäß ISO 11357-3 mit einer Heizrate von 20 °C/Minute bestimmte Schmelzpunkt im Bereich von 127 °C bis 134 °C liegt.

5. Terpolymer nach einem der Ansprüche 1 bis 4, wobei in Komponente A) die $C^{13}$-NMR-Sequenzen EEE im Bereich von 0,18 Mol.% bis 0,35 Mol.% liegen.

6. Terpolymer nach einem der Ansprüche 1 bis 5, wobei in Komponente A) der Gehalt der von Ethylen abgeleiteten Einheiten im Bereich von 0,7 Gew.% bis 2,8 Gew.% liegt.

7. Terpolymer nach einem der Ansprüche 1 bis 6, wobei in Komponente A) der Gehalt der von 1-Buten abgeleiteten Einheiten im Bereich von 8,3 Gew.% bis 13,2 Gew.% liegt.

8. Terpolymer nach einem der Ansprüche 1 bis 7, wobei in Komponente B) der Gehalt der von Ethylen abgeleiteten Einheiten im Bereich von 0,7 Gew.% bis 2,8 Gew.% liegt.

9. Terpolymer nach einem der Ansprüche 1 bis 8, wobei in Komponente B) der Gehalt der von 1-Buten abgeleiteten Einheiten im Bereich von 16,6 Gew.% bis 23,3 Gew.% liegt.

10. Terpolymer nach einem der Ansprüche 1 bis 9 mit einer gemäß ISO 1133 bei 230 °C unter einer Last von 2,16 kg gemessenen Schmelzflussrate, MFR, im Bereich von 4,0 g/10 min bis 13,2 g/10 min.

11. Terpolymer nach einem der Ansprüche 1 bis 10, wobei in Komponente A) die gemäß ISO 1133 bei 230 °C unter einer Last von 2,16 kg gemessene Schmelzflussrate, MFR, im Bereich von 3,0 g/10 min bis 13,0 g/10 min liegt.

12. Terpolymer nach einem der Ansprüche 1 bis 11, wobei in Komponente A) der Gehalt der von Ethylen abgeleiteten Einheiten im Bereich von 0,9 Gew.% bis 2,2 Gew.% liegt.

13. Terpolymer nach einem der Ansprüche 1 bis 12, wobei in Komponente A) der Gehalt der von 1-Buten abgeleiteten Einheiten im Bereich von 9,5 Gew.% bis 12,2 Gew.% liegt.

14. Film, umfassend das Terpolymer nach den Ansprüchen 1 bis 13.

15. Film nach Anspruch 14, der ein BOPP-Film ist.

**Revendications**

1. Composition de terpolymère comprenant :

    A) 80 % en poids à 97 % en poids d'un terpolymère de propylène, d'éthylène et de 1-butène présentant :

        i) la teneur en motifs dérivés de l'éthylène située dans la plage de 0,5 % en poids à 3,2 % en poids, mesurée selon le procédé défini dans la description ;
        ii) la teneur en motifs dérivés de 1-butène située dans la plage de 7,2 % en poids à 14,8 % en poids, mesurée selon le procédé défini dans la description ;
        iii) la fraction soluble dans le xylène à 25 °C située dans la plage de 7,2 % en poids à 13,4 % en poids, mesurée selon le procédé défini dans la description ;
        iv) le point de fusion, déterminé par calorimétrie différentielle à balayage (DSC) selon la norme ISO 11357-3 à une vitesse de chauffage de 20 °C/minute, situé dans la plage de 123 °C à 138 °C ;
        v) les séquences EEE par $^{13}$C-RMN situées dans la plage de 0,16 % en mole à 0,40 % en mole, mesurées selon le procédé défini dans la description ;
        vi) l'indice de fluidité à chaud, MFR, mesuré selon la norme ISO 1133 à 230 °C sous une charge de 2,16 kg, situé dans la plage de 1,0 g/10 min à 20,0 g/10 min ;

    B) 20 % en poids à 3 % en poids d'un terpolymère de propylène, d'éthylène et de 1-butène présentant :

        i) la teneur en motifs dérivés de l'éthylène située dans la plage de 0,5 % en poids à 3,2 % en poids ;
        ii) la teneur en motifs dérivés de 1-butène située dans la plage de 14,4 % en poids à 26,5 % en poids ;
        iii) la fraction soluble dans le xylène à 25 °C située dans la plage de 38,2 % en poids à 60,2 % en poids ;
        la teneur en motifs dérivés de 1-butène du constituant A) étant inférieure à la quantité de la teneur en motifs dérivés de 1-butène du constituant B) ; et
        la composition de terpolymère présentant l'indice de fluidité à chaud, MFR, mesuré selon la norme ISO 1133 à 230 °C sous une charge de 2,16 kg, situé dans la plage de 3,0 g/10 min à 20,0 g/10 min ;
        la somme des quantités de A) et B) valant 100 % en poids.

2. Terpolymère selon la revendication 1, comprenant 83 % en poids à 95 % en poids du constituant A) et 17 % en poids à 5 % en poids du constituant B).

3. Terpolymère selon l'une quelconque des revendications 1 à 2, dans lequel, dans le constituant A), la fraction soluble dans le xylène à 25 °C est située dans la plage de 8,3 % en poids à 12,2 % en poids.

4. Terpolymère selon l'une quelconque des revendications 1 à 3, dans lequel, dans le constituant A), le point de fusion, déterminé par calorimétrie différentielle à balayage (DSC) selon la norme ISO 11357-3 à une vitesse de chauffage de 20 °C/minute, est situé dans la plage de 127 °C à 134 °C.

5. Terpolymère selon l'une quelconque des revendications 1 à 4, dans lequel, dans le constituant A), les séquences EEE par $^{13}$C-RMN sont situées dans la plage de 0,18 % en mole à 0,35 % en mole.

6. Terpolymère selon l'une quelconque des revendications 1 à 5, dans lequel, dans le constituant A), la teneur en motifs dérivés de l'éthylène est située dans la plage de 0,7 % en poids à 2,8 % en poids.

7. Terpolymère selon l'une quelconque des revendications 1 à 6, dans lequel, dans le constituant A), la teneur en motifs dérivés de 1-butène est située dans la plage de 8,3 % en poids à 13,2 % en poids.

**8.** Terpolymère selon l'une quelconque des revendications 1 à 7, dans lequel, dans le constituant B), la teneur en motifs dérivés de l'éthylène est située dans la plage de 0,7 % en poids à 2,8 % en poids.

**9.** Terpolymère selon l'une quelconque des revendications 1 à 8, dans lequel, dans le constituant B), la teneur en motifs dérivés de 1-butène est située dans la plage de 16,6 % en poids à 23,3 % en poids.

**10.** Terpolymère selon l'une quelconque des revendications 1 à 9 présentant l'indice de fluidité à chaud, MFR, mesuré selon la norme ISO 1133 à 230 °C sous une charge de 2,16 kg, situé dans la plage de 4,0 g/10 min à 13,2 g/10 min.

**11.** Terpolymère selon l'une quelconque des revendications 1 à 10, dans lequel, dans le constituant A), l'indice de fluidité à chaud, MFR, mesuré selon la norme ISO 1133 à 230 °C sous une charge de 2,16 kg, est situé dans la plage de 3,0 g/10 min à 13,0 g/10 min.

**12.** Terpolymère selon l'une quelconque des revendications 1 à 11, dans lequel, dans le constituant A), la teneur en motifs dérivés de l'éthylène est située dans la plage de 0,9 % en poids à 2,2 % en poids.

**13.** Terpolymère selon l'une quelconque des revendications 1 à 12, dans lequel, dans le constituant A), la teneur en motifs dérivés de 1-butène est située dans la plage de 9,5 % en poids à 12,2 % en poids.

**14.** Film comprenant le terpolymère selon les revendications 1 à 13.

**15.** Film selon la revendication 14 qui est un film BOPP.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017114840 A
- EP 1012195 A
- EP 45977 A
- EP 361494 A
- EP 728769 A
- EP 1272533 A
- WO 00163261 A
- WO 9844009 A

**Non-patent literature cited in the description**

- **D. GELDART.** Gas Fluidisation Technology. J. Wiley & Sons Ltd, 1986, 155
- **C.J. CARMAN ; R.A. HARRINGTON ; C.E. WILKES.** *Macromolecules,* 1977, vol. 10 (3), 536